# EUROPÄISCHE PATENTANMELDUNG

(11) **EP 1 180 744 A1**
(43) Veröffentlichungstag der Anmeldung: **20.02.2002**
(21) Anmeldenummer: 00117837.5
(22) Anmeldetag: 18.08.2000
(51) Int. Cl.: G07C 9/00, E05B 47/00

(54) **Schrank, insbesondere Schalt-, Rechner- oder Geräteschrank, System zur ferngesteuerten Entriegelung einer oder mehrerer Türen, und Riegelmechanismen für eine Tür**

(71) Anmelder: DÄTWYLER AG SCHWEIZERISCHE KABEL-, GUMMI- UND KUNSTSTOFFWERKE, CH-6460 Altdorf (CH)
(72) Erfinder: Fischinger, Ralf, 65779 Kelkheim (DE)
(74) Vertreter: Lippich, Wolfgang, Dipl.-Pys., Dr.rer.nat.

(57) **Zusammenfassung**

Die Erfindung betrifft einen Schrank, insbesondere Schalt-, Rechner- oder Geräteschrank, mit wenigstens einer Tür (5) und einem Riegelmechanismus (6) für die Tür (5), welcher eine fernsteuerbare Riegeleinrichtung (11), die bei einem Funktionsausfall die Tür (5) verriegelt hält, umfaßt, wobei der Riegelmechanismus (6) außerdem eine lokal durch Schlüssel betätigbare Riegeleinrichtung (12) aufweist, und wobei die durch Schlüssel betätigbare Riegeleinrichtung (12) und die fernsteuerbare Riegeleinrichtung (11) zusammenwirken und eine Entriegelungs-Betätigung der durch Schlüssel betätigbaren Riegeleinrichtung (12) zumindest bei einem Funktionsausfall der fernsteuerbaren Riegeleinrichtung (11) die Tür (5) entriegelt.

## Beschreibung

Die Erfindung betrifft einen Schrank, insbesondere Schalt-, Rechner- oder Geräteschrank, mit wenigstens einer Tür und einem Riegelmechanismus für die Tür, welcher eine fernsteuerbare Riegeleinrichtung, die bei einem Funktionsausfall die Tür verriegelt hält, umfaßt. Die Erfindung betrifft auch ein System zur ferngesteuerten Entriegelung einer oder mehrerer Türen, insbesondere Schranktüren, mit einem Computer zur zentralen Entriegelungssteuerung der Türen und einem oben genannten Riegelmechanismus für die Tür. Die Erfindung betrifft schließlich noch zwei Riegelmechanismen.

Mit zunehmender Computervernetzung werden Sicherheitsaspekte immer bedeutsamer. Dies gilt nicht nur für Unternehmen, deren hauptsächliche Geschäftsaktivität das Bereitstellen von Rechnerleistungen in einem Netzwerk darstellt (z.B. Serverdienstleistungen im Internet), sondern auch für solche Unternehmen, für die ein internes und/oder externes Netzwerk ein infrastrukturelles Instrument zur Abwicklung von betrieblichen Abläufen darstellt. In beiden Fällen kanr ein Ausfall des Netzes zur Lähmung des ganzen Betriebes führen und daher große Schäden verursachen.

Sicherheitsprobleme bestehen nicht nur hinsichtlich Software und Daten, sondern auch hinsichtlich der Hardware. Es ist vor diesem Hintergrund erkannt worden, daß der Zugang zu Schränken und Räumen, welche z.B. Netzwerkkomponenten enthalten (Schaltschränke, Datenschränke, Serverschränke und -räume), nicht jedermann ermöglicht werden darf. Viel zu groß wäre dann die Gefahr, daß ein Mitarbeiter oder eine Fremdperson einen derartigen Schrank öffnet bzw. einen derartigen Raum betritt und mutwillig oder unabsichtlich die "Innereien" solcher Schränke oder Räume beschädigen oder zumindest deren Funktion stören könnte.

Es ist daher bereits bekannt, die Türen derartiger Schränke und Räume mit einem Verriegelungsmechanismus auszurüsten, welcher von einem zentralen Computersystem ferngesteuert entriegelt und verriegelt werden kann (sofern die Verriegelung nicht automatisch beim Schließen der Tür erfolgt). Neben der zentral ferngesteuerten Verriegelung sind derartige Systeme i.a. auch mit einer Protokollierungsfunktion ausgerüstet. Hierbei wird im zentralen Computersystem protokolliert, welche Tür zu welchem Zeitpunkt für welche Person entriegelt und anschließend wieder verriegelt wurde. Beschädigungen und Funktionsstörungen, die sich erst zu einem späteren Zeitpunkt bemerkbar machen, können so gegebenenfalls einer bestimmten Person zugeordnet werden.

Allerdings liegt bei diesen bekannten zentralen Verriegelungssystemen ein sicherheitstechnisches Problem anderer Art vor. Und zwar lassen sich bei einem Funktionsausfall, etwa einem Stromausfall oder einer Störung des zentralen Steuerungscomputers, die in das System einbezogenen Schränke und Türen nicht mehr öffnen. Denn deren Verriegelungsmechanismen haben als Antriebe Elektromagnete, welche in die Schließstellung federbeaufschlagt sind. Falls bei einem solchen Funktionsausfall ein Zugang in einen entsprechenden Schrank oder Raum gewährt werden muß, etwa zur Brandbekämpfung, kann die entsprechende Tür nur gewaltsam geöffnet werden.

Zur Lösung dieses Problems ist es bereits bekannt, die Verriegelungsmagnete im umgekehrten Sinn, also in die Offenstellung zu beaufschlagen. Bei einem Funktionsausfall fallen die (dann dauernd zu erregenden) Elektromagnete ab, die Türen entriegeln sich dann also selbsttätig. Während diese Möglichkeit das zweitgenannte Sicherheitsproblem (Zugangsgewährung bei Funktionsausfall) einwandfrei löst, ist sie hinsichtlich des erstgenannten Sicherheitsproblems (Zugangsgewährung nur an Befugte einschließlich Zugangsprotokollierung) nicht optimal. Denn Unbefugte können sich durch absichtliche Herbeiführung eines Funktionsausfalls (z.B. Ausschalten der Stromversorgung) jederzeit Zugang verschaffen.

Ferner sind im Stand der Technik Kombinationen von lokal betätigbaren Schlössern und ferngesteuerten Riegeleinrichtungen bekannt, die jedoch in einem anderen Funktionskontext stehen. Und zwar geht es bei diesen darum, daß ein Schloß nicht nur - wie herkömmlich - durch Einführen des passenden Schlüssels geöffnet werden kann, sondern daß es zusätzlich durch einen zentralen Schloßsteuercomputer freigegeben werden muß. Denkbar wäre beispielsweise, sämtliche Schlösser außerhalb bestimmter Zugangszeiträumen zentral zu sperren und nur innerhalb dieser Zeiten zentral zu entsperren. Zum Öffnen einer betreffenden Tür wird dann nicht nur ein passender Schlüssel benötigt, sondern der Öffnungsversuch muß auch innerhalb des Zugangszeitraums liegen. Beispiele hierfür finden sich in der DE 199 839 A1 und DE 198 08 270 C1.

Schließlich sind mit Schlüssel öffnungsfähige Hauseingangstüren üblich, deren bewegliche Riegelhinterschneidung im Türrahmen elektromagnetisch von der jeweiligen Wohnung aus ferngesteuert entsperrt werden kann, so daß die Tür auch ohne Schlüssel geöffnet werden kann.

Die Erfindung stellt gemäß einem ersten Aspekt einen Schrank, insbesondere einen Schalt-, Rechner- oder Geräteschrank bereit, welcher wenigstens eine Tür und einen Riegelmechanismus für die Tür aufweist. Der Riegelmechanismus umfaßt eine fernsteuerbare Riegeleinrichtung, die bei einem Funktionsausfall die Tür verriegelt hält. Der Riegelmechanismus weist außerdem eine lokal durch Schlüssel betätigbare Riegeleinrichtung auf. Die durch Schlüssel betätigbare Riegeleinrichtung und die fernsteuerbare Riegeleinrichtung wirken zusammen, derart, daß bei einer Entriegelungsbetätigung der durch Schlüssel betätigbaren Riegeleinrichtung die Tür zumindest bei einem Funktionsausfall der fernsteuerbaren Riegeleinrichtung entriegelt wird.

Gemäß einem zweiten Aspekt ist die Erfindung auf ein System zur ferngesteuerten Entriegelung einer oder mehrerer Türen, insbesondere Schranktüren gerichtet. Das System umfaßt einen Computer zur zentralen Entriegelungssteuerung der Türen und jeweils einen Riegelmechanismus für die Türen, welcher eine fernsteuerbare Riegeleinrichtung, die bei einem Funktionsausfall die Tür verriegelt hält, umfaßt. Der Riegelmechanismus umfaßt außerdem eine lokal durch Schlüssel betätigbare Riegeleinrichtung. Diese und die fernsteuerbare Riegeleinrichtung wirken zusammen, derart, daß eine Entriegelungs-Betätigung der durch Schlüssel betätigbaren Riegeleinrichtung zumindest bei einem Funktionsausfall der fernsteuerbaren Riegeleinrichtung die Tür entriegelt.

Die Erfindung ist gemäß einem dritten Aspekt auf einen Riegelmechanismus für eine Tür gerichtet, welche folgendes umfaßt: eine fernsteuerbare Riegeleinrichtung, die bei einem Funktionsausfall die Tür verriegelt hält, und eine lokal durch Schlüssel betätigbare Riegeleinrichtung. Die durch Schlüssel betätigbare Riegeleinrichtung betätigt die fernsteuerbare Riegeleinrichtung mechanisch, derart, daß eine Entriegelungs-Betätigung der durch Schlüssel betätigbaren Riegeleinrichtung zumindest bei einem Funktionsausfall der fernsteuerbaren Riegeleinrichtung die Tür entriegelt.

Gemäß einem vierten Aspekt ist die Erfindung schließlich auf einen Riegelmechanismus für eine Tür gerichtet, welcher folgendes umfaßt: eine fernsteuerbare Riegeleinrichtung, die bei einem Funktionsausfall die Tür verriegelt hält, und eine lokal durch Schlüssel betätigbare Riegeleinrichtung, welche ein Drehglied aufweist. Das Drehglied der durch Schlüssel betätigbaren Riegeleinrichtung und die fernsteuerbare Riegeleinrichtung wirken derart zusammen, daß eine Entriegelungs-Betätigung der durch Schlüssel betätigbaren Riegeleinrichtung zu einer Drehung des Drehglieds führt, welche zumindest bei einem Funktionsausfall der fernsteuerbaren Riegeleinrichtung die Tür entriegelt.

Die Erfindung wird nun anhand von bevorzugten Ausführungsbeispielen und der angefügten beispielhaften Zeichnung näher erläutert. In der schematischen Zeichnung zeigen:
- Fig. 1: Ein Diagramm eines Systems zur ferngesteuerten Entriegelung von Türen;
- Fig. 2: einen Längsschnitt eines Riegelmechanismus bei ferngesteuerter Entriegelungsfunktion;
- Fig. 3: einen Querschnitt des Riegelmechanismus von Fig. 2 entlang der Linie II-II;
- Fig. 4: einen Längsschnitt eines Riegelmechanismus gemäß Fig. 2, jedoch bei einem Funktionsausfall nach Entriegelung mit Hilfe eines Schlüssels;
- Fig. 5: einen Querschnitt des Riegelmechanismus nach Fig. 4 entlang der Linie IV-IV.

In den Figuren tragen sich entsprechende Elemente gleiche Bezugszeichen.

Bevor eine Ausführungsform eines Systems zur ferngesteuerten Türentriegelung näher erläutert wird, folgen zunächst einige Anmerkungen zu den offenbarten Ausführungsformen.

Bei den gezeigten Ausführungsformen dient als Antrieb für die ferngesteuerte Riegeleinrichtung ein Elektromagnet. Es können aber auch andere geeignete Antriebe zur Anwendung kommen, z.B. elektromotorische Stellantriebe, pneumatische Antriebe etc.. Bei den gezeigten Ausführungsformen wird ein federbeaufschlagter monostabiler Elektromagnet verwendet. Hierbei handelt es sich um einen Elektromagneten, dessen Anker sich bei Nicht-Erregung aufgrund der Federbeaufschlagung in einer Ruheposition befindet, und bei Erregung der (i.a. einzigen) Spule aus der Ruheposition in eine Erregungsposition bewegt wird. Die Ruheposition ist die Verriegelungsposition des Riegelmechanismus, die Erregungsposition hingegen ist dessen Entriegelungsposition. Bei anderen (nicht gezeigten) Ausführungsformen findet ein bistabiler Elektromagnet Anwendung. Hierbei handelt es sich um einen Elektromagneten mit zwei Spulen, mit deren Hilfe der (nicht-federbeaufschlagte) Anker elektromagnetisch sowohl von der Entriegelungs- in die Verriegelungsposition als auch von der Verriegelungs- in die Entriegelungsposition bewegt werden kann und nach Beendigung der Erregung in der dann jeweils eingenommenen Position stabil verbleibt.

Mit dem genannten Funktionsausfall sind alle diejenigen Funktionsstörungen gemeint, bei denen der Riegelmechanismus nicht mehr mit Hilfe der Fernsteuerung entriegelt werden kann. Hierbei handelt es sich beispielsweise um einen Stromausfall oder um ein Versagen der Fernsteuerung (beispielsweise aufgrund einer Funktionsstörung eines Computers zur zentralen Entriegelungssteuerung). Ferner kann es sich bei dem Funktionsausfall auch um ein lokales Versagen der fernsteuerbaren Riegeleinrichtung handeln, beispielsweise wenn der als Antrieb dienende Elektromagnet ausfällt.

Bei den gezeigten Ausführungsformen wirken die durch Schlüssel betätigbare Riegeleinrichtung und die fernsteuerbare Riegeleinrichtung in einer besonderen Weise zusammen: wenn erstere mit Hilfe des Schlüssels betätigt, also beispielsweise entriegelt wird, bewirkt sie eine mechanische Betätigung der fernsteuerbaren Riegeleinrichtung, durch welche die Tür entriegelt wird. Bei anderen (nicht gezeigten) Ausführungsformen wird die Entriegelung hingegen erzielt, indem die schlüsselbetätigbare Riegeleinrichtung außer Eingriff mit der fernsteuerbaren Riegeleinrichtung gebracht wird.

Grundsätzlich ist es möglich, die beiden Riegeleinrichtungen, also die durch Schlüssel betätigbare und die fernsteuerbare Riegeleinrichtung, gemeinsam an der Tür oder dem Türanschlag anzuordnen. Bei den offenbarten Ausführungsformen ist aber eine andere Lösung gewählt, die sich einfacher in bestehende Schrankkonstruktionen einfügen läßt. Und zwar ist eine der beiden Riegeleinrichtungen an der Tür und die andere am Türanschlag angeordnet.

Während bei üblichen Schlössern eine mit dem Schlüssel getätigte Drehbewegung in eine Translationsbewegung eines Riegels umgesetzt wird, ist bei den offenbarten Ausführungsformen keine derartige Umsetzung vorgesehen. Vielmehr weist dort die schlüsselbetätigbare Riegeleinrichtung ein Drehglied mit einer Riegelnut auf, in welche ein Riegel der fernsteuerbaren Riegeleinrichtung in der Verriegelungsstellung eingreift und in der Entriegelungsstellung nicht eingreift.

Wie bereits oben erwähnt wurde, erfolgt bei den gezeigten Ausführungsbeispielen das Zusammenwirken der schlüsselbetätigten Riegeleinrichtung und der fernsteuerbaren Riegeleinrichtung zum Zwecke der lokalen mechanischen Entriegelung so, daß die erstgenannte Riegeleinrichtung die zweitgenannte mechanisch betätigt. Genauer erfolgt dies dadurch, daß das Drehglied bei einer Drehung von der Verriegelungsstellung in die Entriegelungsstellung den Riegel der fernsteuerbaren Riegeleinrichtung in diejenige Richtung verschiebt, in die er bei ferngesteuerter Entriegelung bewegt wird, und hierdurch die Tür entriegelt.

Da bei den offenbarten Ausführungsbeispielen der Riegel der fernsteuerbaren Riegeleinrichtung direkt in die Riegelnut der schlüsselbetätigbaren Riegeleinrichtung eingreift, könnte sich eine Kraftbeaufschlagung quer zur Riegelbewegungsrichtung nachteilig für die sichere Funktion der ferngesteuerten Riegeleinrichtung auswirken. Eine solche Kraftbeaufschlagung kann beispielsweise vorliegen, wenn die Tür nicht ganz vollständig geschlossen wurde. Um unter solchen Umständen eine einwandfreie Funktion des Riegelmechanismus sicherzustellen, ist die Tür bei den offenbarten Ausführungsformen zusätzlich mit einem Schnappverschluß ausgerüstet, welcher eine derartige Stellung der geschlossenen Tür sicherstellt, bei welcher die fernsteuerbare Riegeleinrichtung frei von Kraftbeaufschlagungen durch die Tür arbeiten kann.

Bei den offenbarten Ausführungsformen schließt die zentrale Entriegelungssteuerung auch eine Überwachung dahingehend ein, ob die in das System einbezogenen Türen geschlossen sind und der Riegelmechanismus die Türen verriegelt. Für diese Überwachung ist der Schrank bzw. der Riegelmechanismus mit geeigneten Zustandsgebern ausgerüstet. Bei einfacheren (nicht gezeigten) Ausführungsformen wird nur der Schließzustand der Tür oder Verriegelungszustand des Riegelmechanismus mit einem Zustandsgeber überwacht. Es wird dann jeweils unterstellt, daß bei verriegeltem Riegelmechanismus die Tür geschlossen ist bzw. bei geschlossener Tür der Riegelmechanismus diese verriegelt.

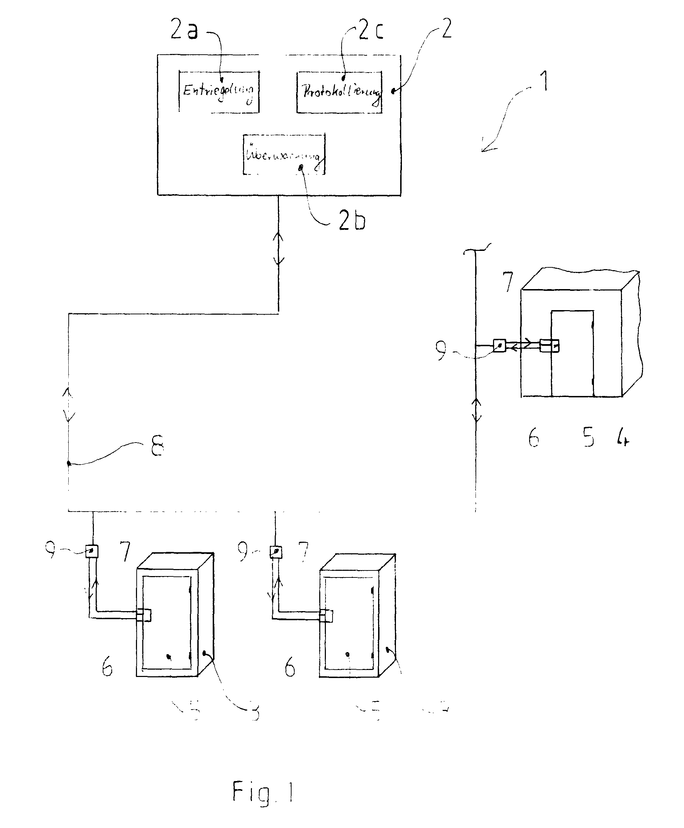

Nun zurückkommend auf Fig. 1, ist dort ein Diagramm der Architektur eines Systems 1 zur ferngesteuerten Türentriegelung gezeigt. Herzstück dieses Systems ist ein Computer 2 zur zentralen Entriegelungssteuerung. Dieser ist so programmiert, daß er u.a. drei Funktionen erfüllen kann. Diese sind in Fig. 1 durch Funktionsblöcke stilisiert. Es handelt sich um die Funktion der eigentlichen Türentriegelung und - verriegelung (Funktionsblock 2a), der Türzustandsüberwachung (Funktionsblock 2b) und der Entriegelungs- und Zustandsprotokollierung (Funktionsblock 2c). Zu dem System 1 gehören ferner Schaltschränke 3 sowie ein Serverraum 4, die jeweils mit einer Tür 5 ausgerüstet sind. Jeder Tür 5 ist ein - unten näher erläuterter - Riegelmechanismus 6 zugeordnet. Die Tür 5 und der Riegelmechanismus 6 ist mit Zustandsgebern 7 ausgerüstet. Diese liefern Signale, welche anzeigen, ob die Tür 5 geschlossen ist und der Riegelmechanismus 6 diese verriegelt. Zu den Zustandsgebern kann ferner ein Öffnungswunsch-Sensor gehören. Dieser gibt ein Signal ab, wenn eine Person an der Tür zieht (oder ggf. drückt) und hierdurch einen Öffnungswunsch signalisiert. Zur Kommunikation zwischen den verschiedenen Elementen des Systems dient ein Bus 8, welcher den Computer 2 über Kommunikations-Schnittstellen 9 mit den Verriegelungsmechanismen 6 und Stellungsgebern 7 der Türen 5 verbindet. Bei dem Bus 8 handelt es sich vorteilhaft um einen EIB (European Installation Bus), welcher neben der Signalkommunikation auch der Leistungsstromversorgung dient. Ganz besonders vorteilhaft handelt es sich um eine Spezialform des EIB gemäß der Europäischen Patentanmeldungsschrift EP 0 665 608 A2, bei dem ein durchlaufendes Hybrid-Flachkabel an den einzelnen Kommunikations-Schnittstellen 9 mit Durchstech-Technik kontaktiert wird.

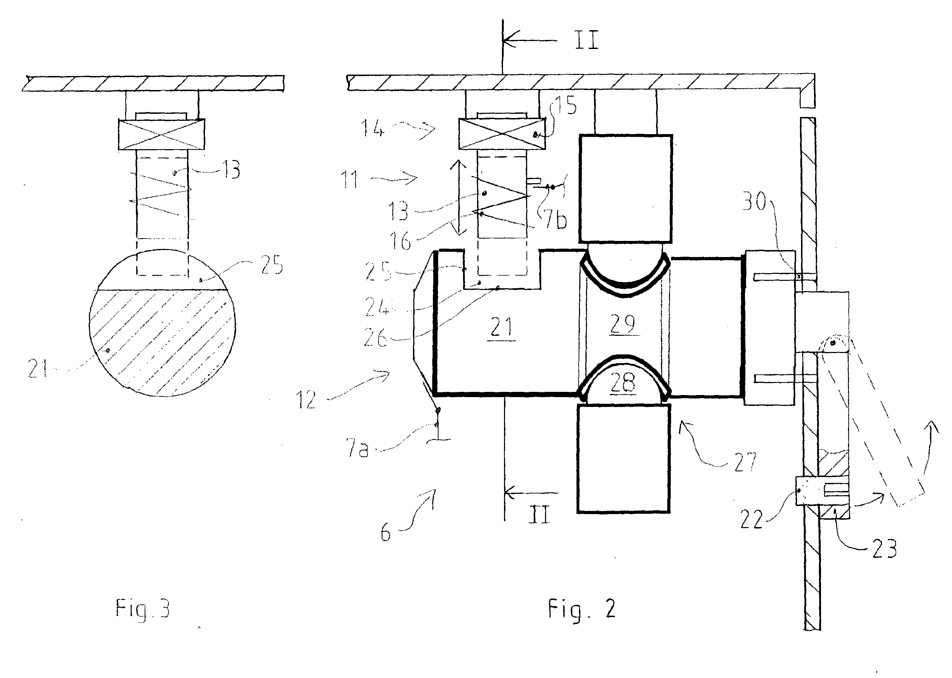

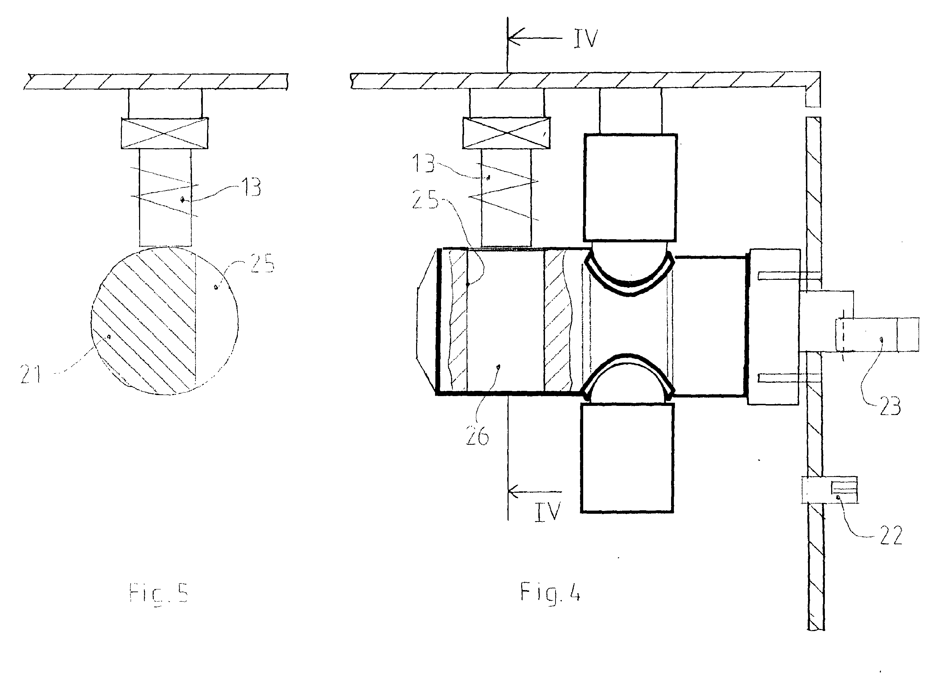

Die Fig. 2 bis 5 zeigen den Riegelmechanismus 6 in detaillierterer Form, wobei sich die Fig. 2 und 3 auf den Normalbetrieb, die Fig. 4 und 5 hingegen auf die schlüsselbetätigte Entriegelung bei Funktionsausfall der fernsteuerbaren Riegeleinrichtung beziehen.

Der Riegelmechanismus 6 ist aus zwei Teilmechanismen aufgebaut, nämlich einer am Schrank 3 bzw. am Türanschlag des Serverraums 4 angebrachten fernsteuerbaren Riegeleinrichtung 11 sowie einer an der Tür 5 angebrachten, lokal durch Schlüssel betätigbaren Riegeleinrichtung 12.

Die fernsteuerbare Riegeleinrichtung 11 weist einen quer zur Schließrichtung der Tür 5 verschiebbaren Riegel 13 auf, dessen hinterer Teil den verschiebbaren Anker eines Elektromagneten 14 mit einer Spule 15 bildet. Der Riegel 13 ist durch eine Feder 16 in Richtung zur schlüsselbetätigbaren Riegeleinrichtung 12 beaufschlagt. Wenn der Elektromagnet 14 durch Ansteuerung seitens der Kommunikations-Schnittstellen 9 erregt wird, wird der Riegel 13 gegen die Kraft der Feder 16 von der schlüsselbetätigten Riegeleinrichtung 12 weggezogen (die dann erreichte Endstellung ist in den Fig. 2 und 3 mit durchgezogenen Linien dargestellt). Sobald die Erregung beendet wird, fällt der Riegel 13 aufgrund der Beaufschlagung durch die Feder 16 in die Ausgangsstellung zurück, in welcher die Tür 5 verriegelt ist (in den Fig. 2 und 3 ist diese Stellung strichliert dargestellt).

Die schlüsselbetätigbare Riegeleinrichtung 12 ist aus einem Drehglied 21 aufgebaut, welches die Gestalt eines Drehzapfens mit im wesentlichen zylindrischer Grundform hat, dessen Längs- und Drehachse senkrecht zur Hubrichtung des Riegels 13 verläuft. Das Drehglied 21 ist in der Tür 5 drehbar gelagert. Eine Drehbetätigung ist jedoch durch ein Schloß 22 ausgeschlossen, solange dieses nicht mit Hilfe eines passenden Schlüssels entsperrt wird. Grundsätzlich ist es möglich, das Schloß 22 direkt in der Drehachse des Drehglieds 21 anzuordnen. Bei den gezeigten Ausführungsbeispielen ist jedoch außen an dem Drehglied 21 eine Schwenkklinke 23 angelenkt, deren äußeres Ende mit dem Schloß 22 zusammenwirkt. In der Sperrstellung liegt die Schwenkklinke 23 parallel zur Tür 5, wobei das versperrte Schloß 22 deren äußeres Ende an der Schranktür 5 niederhält und eine Schwenkbetätigung der Schwenkklinke 23 verbietet. Wenn hingegen ein Benutzer das Schloß 22 mit Hilfe des Schlüssels aufsperrt, kann er die Schwenkklinke 23 um einen spitzen Winkel (z.B. 20-30°) aus der Türebene herausschwenken, nach Art einer normalen Türklinke herunterdrücken und hierdurch das Drehglied 21 drehen, beispielsweise um 90°.

An dem der Tür 5 abgewandten Ende ist das Drehglied 21 mit einer Riegelnut 24 versehen, welche in der Sperrstellung des Drehglieds 21 den Riegel 13 im nicht erregten Zustand des Elektromagneten 14 aufnimmt. Da die hintere Wand 25 der Riegelnut 24 eine Hinterschneidung für den Riegel 13 darstellt, ist die Tür 5 in diesem Zustand verriegelt. Wie die Fig. 4 und 5 veranschaulichen, ist die Riegelnut 24 jedoch flach ausgeführt, daß bei einem Niederdrücken der Schwenkklinke 23 um z.B. 90° und entsprechender Drehung des Drehglieds 21 der Riegel 13 von dem nun schwenkenden Nutboden 26 am umfangsseitigen Ende der Nut 24 gegen die Federkraft zurückgeschoben wird. (Bei nicht gezeigten Ausführungsformen genügt bereits ein kleinerer Schwenkwinkel zur Entriegelung, z.B. 45°.) Der Riegel 13 läßt diese Art der mechanischen Betätigung zu, da er nicht etwa in seiner Bewegungsbahn arretiert ist, sondern nur durch die Feder 16 beaufschlagt ist. Wenn die Schwenkklinke 23 vollständig heruntergedrückt wurde, ist der Riegel 13 ausreichend weit zurückgeschoben worden, daß er nicht mehr durch die hintere Nutwand 25 hinterschnitten wird. Folglich läßt sich dann die Tür 5 durch Zug an der Schwenkklinke 23 öffnen.

Bei anderen (nicht gezeigten) Ausführungsformen ist die Riegelnut ringförmig konzentrisch ausgebildet, es kommt hier also nicht zu einer Verschiebung des Riegels bei einer Drehung des Drehglieds. Das Entriegeln der Tür wird hier vielmehr dadurch erzielt, daß sich die hintere Nutwand 25 nicht über denjenigen Teil des Umfangs erstreckt, der bei niedergedrückter Schwenkklinke 23 im Bereich des Riegels liegt. Mit anderen Worten bildet die hintere Nutwand bei niedergedrückter Schwenkklinke keine Hinterschneidung, so daß die Tür in dieser Klinkenstellung öffnungsfähig ist.

Ein Schnappverschluß 27 stellt sicher, daß die Tür 5 in geschlossenem Zustand selbsttätig eine Stellung einnimmt, in welcher der Riegel 13 keine der Wände der Riegelnut 24 berührt, was für eine einwandfreie Funktion der fernsteuerbaren Riegeleinrichtung 11 vorteilhaft ist. Der Schnappverschluß 27 ist als Kugeldruckverschluß ausgebildet und weist entsprechend eine oder mehrere federbelastete, mit dem Schrank 3 bzw. dem Türrahmen des Serverraums 4 verbundene, federbelastete Kugeln 28 auf, welche in eine entsprechende Ausnehmung 29 im Drehglied 21 einschnappen. Die Ausnehmung 29 kann kugelabschnittförmig sein, kann sich aber auch ringförmig um das Drehglied 21 erstrecken, um dessen Drehbewegung nicht zu erschweren.

Zur Zustandsüberwachung sind zwei Zustandsgeber 7 in Form monostabiler Mikroschalter vorgesehen. Ein erster Zustandsgeber 7a ist so angeordnet, daß er betätigt wird, wenn die Tür 5 vollständig geschlossen ist. Die Betätigung kann beispielsweise durch die Tür 5 selbst oder das Drehglied 21 (wie in Fig. 2 gezeigt) erfolgen. Ein zweiter Zustandsgeber 7b überwacht den Verriegelungszustand. Er ist so angeordnet, daß er von dem Riegel 13 direkt oder indirekt betätigt wird, wenn sich dieser in der in den Fig. 2 und 3 strichliert gezeichneten Verriegelungsstellung befindet. Ferner kann ein dritter Zustandsgeber vorgesehen sein, welcher registriert, daß eine Bedienungsperson an der Tür 5 zieht. Bei den gezeigten Ausführungsformen ist hierfür aber kein gesonderter Zustandsgeber vorgesehen, vielmehr übernimmt diese Funktion der für den Türschließzustand zuständige Zustandsgeber 7a, welcher so empfindlich eingestellt ist, daß er bereits eine, durch solchen Zug hervorgerufene kleine Öffnungsbewegung der Tür registrieren kann.

Der Riegelmechanismus 6 ist insgesamt so gestaltet, daß er zum Einbau in die meisten handelsüblichen Schaltschränke mit Vorreiberverschluß geeignet ist. Solche Schaltschränke weisen im allgemeinen eine Schwenkklinke samt Schloß nach der in den Fig. 2 und 4 gezeichneten Art auf. Mit dieser Schwenkklinke ist eine Schwenkachse verbunden, welche in das Schrankinnere reicht und an ihrem Ende mit einem Querriegel, einem sog. Vorreiber ausgerüstet ist. Dieser greift in der Schließstellung hinter eine entsprechende Hinterschneidung des Schrankrahmens, in der Offenstellung ist er entgegen aus dem Bereich der Hinterschneidung herausgeschwenkt. Um einen solchen Schrank mit dem offenbarten Riegelmechanismus 6 auszurüsten, wird einerseits am Schrankrahmen die fernsteuerbare Riegeleinrichtung 11 befestigt, andererseits die Schwenkachse samt Vorreiber durch das Drehglied 21 ersetzt. Um die richtige Einstellung des Drehglieds 21 relativ zum Riegel 13 zu erleichtern, ist eine justierbare Befestigung 30 der schlüsselbetätigbaren Riegeleinrichtung 12 an der Tür 5 vorgesehen. Es kann sich hierbei zum Beispiel um in einer Bohrung verschiebbare, arretierbare Befestigungsbolzen handeln.

Die offenbarten Ausführungsformen von Systemen 1 zur ferngesteuerten Türentriegelung funktionieren folgendermaßen: Normalerweise befinden sich die Riegelmechanismen 6 sämtlicher Schränke 3 und Serverräume 4 in dem in Fig. 2 und 3 gestrichelt dargestellten, verriegelten Zustand. Benötigt ein Benutzer Zugang zu einem der Schränke 3 bzw. Serverräume 4, so muß er dem Computer 2 zur zentralen Entriegelungssteuerung seinen Öffnungswunsch mitteilen und sich - bei sicherheitstechnisch anspruchsvolleren Ausführungsformen-außerdem authentifizieren. Dies kann manuell geschehen, etwa indem er seinen Öffnungswunsch einer Bedienungsperson des Computers 2 mitteilt und sich ggf. gegenüber dieser Person authentifiziert, welche daraufhin entsprechende Eingaben in den Computer 2 vornimmt. Die genannten Funktionen sind aber auch automatisierbar. Beispielsweise kann ein Öffnungswunsch dem System 1 durch Ziehen an derjenigen Tür 5 übermittelt werden, welche entriegelt werden soll. Eine automatische Authentifizierung der Person mit Öffnungswunsch ist durch ein übliches Authentifizierungssystem möglich, welches beispielsweise auf Kennworteingabe, Spracherkennung etc. beruhen kann. Die entsprechenden Signale werden über den Bus 8 an den Computer 2 übertragen. Wenn dem Computer 2 manuell oder automatisch ein Öffnungswunsch übermittelt wurde und er diesen nach einer Überprüfung der Zugangsberechtigung akzeptiert, veranlaßt er durch Senden entsprechender Signale über den Bus 8, daß bei dem betreffenden Schrank 3 bzw. Serverraum 4 der Elektromagnet 14 erregt wird. Hierdurch geht der Regelmechanismus 6 in den ferngesteuert entriegelten Zustand über, welcher in den Fig. 2 und 3 mit durchgezogenen Linien gezeichnet ist. Die Bedienungsperson kann sodann die betreffende Tür 5 öffnen. Bei einer vorteilhaften Ausführungsform veranlaßt der Computer 2, daß zeitgleich der nun öffnungsfähige Schrank 3 bzw. Serverraum 4 optisch signalisiert wird. Dies kann beispielsweise dadurch erfolgen, daß die normalerweise ausgeschaltete Innenbeleuchtung des betreffenden Schranks 3 bzw. Serverraums 4 automatisch eingeschaltet wird. Der Computer protokolliert den Öffnungszeitpunkt und ggf. die öffnende Person und überwacht laufend den Schließ- und Verriegelungszustand der Tür.

Nach Fertigstellung der Arbeiten schließt die Bedienungsperson die Tür 5 wieder. Bei bevorzugten Ausführungsformen wird der Elektromagnet 14 nur kurzfristig zum Öffnen erregt, findet sich beim Schließen also wieder in der entlasteten Position. Er wird bei der Schließbewegung durch eine Schrägfläche am Drehglied 21 aus der Ruheposition verschoben und rastet dann in die Riegelnut 24 ein. Bei anderen Ausführungsformen bleibt der Elektromagnet 14 so lange erregt, bis die Tür wieder geschlossen ist. Bei weiteren Ausführungsformen mit bistabilem Elektromagnet erfolgt dessen Rücksetzung in die verriegelte Position nach Schließen der Tür. In allen Fällen registriert und protokolliert der Computer 2 die erfolgte Schließung und veranlaßt ggf. die Ausschaltung der Innenbeleuchtung.

Bei einem Funktionsausfall, etwa einem Stromausfall oder einer Funktionsstörung des Computers 2 bleiben die Regelmechanismen 6 sämtlicher Türen 5 in dem, in Fig. 2 und 3 gestrichelt dargestellten verriegelten Zustand. Nur solche Personen, die über einen für das Schloß 22 passenden Schlüssel verfügen, können durch Aufschließen des Schlosses 22 und Drücken der Schwenkklinke 23 den Regelmechanismus 6 entriegeln und die Tür 5 öffnen, wie dies in Fig. 4 und 5 veranschaulicht ist. Unter "Schlüssel" und "Schloß" wird hierbei übrigens jede Codiereinrichtung verstanden, welche ein autonomes Öffnen (also auch bei Stromausfall) erlaubt und ausreichend sicher sind. Dies können z.B. herkömmliche Kombinationen von Zylinderschloß/Bartschlüssel, mechanisch wirkende Loch- oder Reliefkartenleser mit entsprechenden Karten oder auch elektronisch und elektromechanisch wirkende Codierungsvorrichtungen, welche über eine batteriegepufferte Stromversorgung verfügen, sein. Zur Mißbrauchsvermeidung sollen nur besonders autorisierte Personen Zugang zu einem solchen Schlüssel haben.

Die offenbarten Ausführungsformen stellen also ein Türentriegelungssystem bereit, welches im Normalbetrieb durch eine zentrale Entriegelungssteuerung und bei Funktionsausfall durch Verbleiben im verriegelten Zustand Mißbrauchsmöglichkeiten weitgehend ausschaltet. Personen, die einen besonderen Schlüssel besitzen, können sich jedoch bei einem solchen Funktionsausfall Zugang verschaffen. Dabei sind die offenbarten Ausführungsformen so ausgestaltet, daß sie eine relativ einfache Umrüstung von handelsüblichen Schaltschränken mit Vorreiber-Verschluß erlauben. Die vorgeschlagene Lösung leistet somit einen Beitrag zur Erhöhung der Sicherheit in Datenverarbeitungs- und Steuersystemen.

## Patentansprüche

1. Schrank, insbesondere Schalt-, Rechner- oder Geräteschrank, mit wenigstens einer Tür (5) und einem Riegelmechanismus (6) für die Tür (5), welcher eine fernsteuerbare Riegeleinrichtung (11), die bei einem Funktionsausfall die Tür (5) verriegelt hält, umfaßt,
**dadurch gekennzeichnet, daß**
der Riegelmechanismus (6) außerdem eine lokal durch Schlüssel betätigbare Riegeleinrichtung (12) aufweist,
wobei die durch Schlüssel betätigbare Riegeleinrichtung (12) und die fernsteuerbare Riegeleinrichtung (11) zusammenwirken und eine Entriegelungs-Betätigung der durch Schlüssel betätigbaren Riegeleinrichtung (12) zumindest bei einem Funktionsausfall der fernsteuerbaren Riegeleinrichtung (11) die Tür (5) entriegelt.

2. Schrank nach Anspruch 1, **dadurch gekennzeichnet, daß** die fernsteuerbare Riegeleinrichtung (11) als Antrieb einen Elektromagneten (14) aufweist.

3. Schrank nach Anspruch 2, **dadurch gekennzeichnet, daß** der Elektromagnet (14) ein bistabiler oder ein federbeaufschlagter monostabiler Elektromagnet ist.

4. Schrank nach einem der Ansprüche 1 bis 3, **dadurch gekennzeichnet, daß** es sich bei dem genannten Funktionsausfall um einen Stromausfall oder ein Versagen der Fernsteuerung handelt.

5. Schrank nach einem der Ansprüche 1 bis 4, **dadurch gekennzeichnet, daß** es sich bei dem Zusammenwirken der durch Schlüssel betätigbaren Riegeleinrichtung (12) und der fernsteuerbaren Riegeleinrichtung (11) um eine mechanische Betätigung der fernsteuerbaren Riegeleinrichtung (11) durch die durch Schlüssel betätigbare Riegeleinrichtung (12) handelt.

6. Schrank nach einem der Ansprüche 1 bis 5, **dadurch gekennzeichnet, daß** er aus wenigstens zwei zusammenwirkenden Teilmechanismen aufgebaut ist, von denen einer zur Anordnung an der Tür (5), der andere zur Anordnung am Türanschlag ausgebildet ist, wobei es sich bei dem einen Teilmechanismus um die fernsteuerbare Riegeleinrichtung (11) und bei dem anderen um die durch Schlüssel betätigbare Riegeleinrichtung (12) handelt.

7. Schrank nach Anspruch 6, **dadurch gekennzeichnet, daß** die durch Schlüssel betätigbare Riegeleinrichtung (12) ein Drehglied (21) mit einer Riegelnut (24) aufweist, und die fernsteuerbare Riegeleinrichtung (11) einen Riegel (13) aufweist, der in einer Verriegelungsstellung in die Riegelnut (24) eingreift und in einer Entriegelungsstellung nicht eingreift.

8. Schrank nach Ansprüchen 5 und 7, **dadurch gekennzeichnet, daß** das Drehglied (21) bei einer Drehung von der Verriegelungsstellung in die Entriegelungsstellung den Riegel (13) der fernsteuerbaren Riegeleinrichtung (11) in diejenige Richtung verschiebt, in die er bei ferngesteuerter Entriegelung bewegt wird.

9. Schrank nach einem der Ansprüche 1 bis 8, **dadurch gekennzeichnet, daß** die Tür (5) zusätzlich mit einem Schnappverschluß (27) ausgerüstet ist, welcher eine Stellung der geschlossenen Tür (5) sicherstellt, bei der die fernsteuerbare Riegeleinrichtung (11) frei von Kraftbeaufschlagungen durch die Tür (5) arbeiten kann.

10. Schrank nach einem der Ansprüche 1 bis 9, **dadurch gekennzeichnet, daß** er mit einem oder mehreren Zustandsgebern (7) ausgerüstet ist, mit welchen überwacht werden kann, ob die Tür (5) geschlossen ist und/oder der Riegelmechanismus (6) die Tür (5) verriegelt.

11. System zur ferngesteuerten Entriegelung einer oder mehrerer Türen (5), insbesondere Schranktüren, mit: einem Computer (2) zur zentralen Entriegelungssteuerung der Türen (5),
einem Riegelmechanismus (6) für die Tür (5), welcher eine fernsteuerbare Riegeleinrichtung (11), die bei einem Funktionsausfall die Tür (5) verriegelt hält, umfaßt,
**dadurch gekennzeichnet, daß**
der Riegelmechanismus (6) außerdem eine lokal durch Schlüssel betätigbare Riegeleinrichtung (12) umfaßt,
wobei die durch Schlüssel betätigbare Riegeleinrichtung (12) und die fernsteuerbare Riegeleinrichtung (11) zusammenwirken und eine Entriegelungs-Betätigung der durch Schlüssel betätigbaren Riegeleinrichtung (12) zumindest bei einem Funktionsausfall der fernsteuerbaren Riegeleinrichtung (11) die Tür (5) entriegelt.

12. System nach Anspruch 11, **dadurch gekennzeichnet, daß** der Riegelmechanismus (6) nach einem der Ansprüche 2 bis 10 ausgebildet ist.

13. Riegelmechanismus für eine Tür, mit
einer fernsteuerbaren Riegeleinrichtung (11), die bei einem Funktionsausfall die Tür (5) verriegelt hält, und einer lokal durch Schlüssel betätigbaren Riegeleinrichtung (12),
wobei die durch Schlüssel betätigbare Riegeleinrichtung (12) die fernsteuerbare Riegeleinrichtung (11) mechanisch betätigt und eine Entriegelungs-Betätigung der durch Schlüssel betätigbaren Riegeleinrichtung (12) zumindest bei einem Funktionsausfall der fernsteuerbaren Riegeleinrichtung (11) die Tür (5) entriegelt.

14. Riegelmechanismus nach Anspruch 13, **dadurch gekennzeichnet, daß** er gemäß dem Riegelmechanismus nach einem der Ansprüche 2 bis 4 und 6 bis 10 ausgebildet ist.

15. Riegelmechanismus für eine Tür, mit
einer fernsteuerbaren Riegeleinrichtung (11), die bei einem Funktionsausfall die Tür (5) verriegelt hält, und einer lokal durch Schlüssel betätigbaren Riegeleinrichtung (12), welche ein Drehglied (21) aufweist,
wobei das Drehglied (21) der durch Schlüssel betätigbaren Riegeleinrichtung (12) und die fernsteuerbare Riegeleinrichtung (11) zusammenwirken und eine Entriegelungs-Betätigung der durch Schlüssel betätigbaren Riegeleinrichtung (12) zu einer Drehung des Drehglieds (21) führt, welche zumindest bei einem Funktionsausfall der fernsteuerbaren Riegeleinrichtung (11) die Tür (5) entriegelt.

16. Riegelmechanismus nach einem Anspruch 15, **dadurch gekennzeichnet, daß** er gemäß dem Riegelmechanismus nach einem der Ansprüche 2 bis 10 ausgebildet ist.

17. Riegelmechanismus nach einem der Ansprüche 13 bis 16,
**dadurch gekennzeichnet, daß** er zum Einbau in hierfür nicht eigens konstruierte Schaltschränke und dergleichen geeignet ist, indem das Drehglied (21) zum Einbau anstelle einer Vorreiberachse ausgebildet ist und der fernsteuerbare Riegelmechanismus (11) zum Einbau am Türanschlag ausgebildet ist.
